# EUROPEAN PATENT SPECIFICATION

(11) **EP 1 906 695 B1**
(45) Date of publication and mention of the grant of the patent: **16.09.2009**
(21) Application number: 07702092.3
(22) Date of filing: 16.01.2007
(51) Int. Cl.: H04W 48/04

(54) **METHOD, SYSTEM AND EQUIPMENT FOR AREA MANAGING THE FUNCTION OF USER EQUIPMENT**
VERFAHREN, SYSTEM UND AUSRÜSTUNG ZUR GEBIETSVERWALTUNG DER FUNKTION DER BENUTZERAUSSTATTUNG
PROCÉDÉ, SYSTÈME ET ÉQUIPEMENT DE GESTION DANS UNE ZONE DES FONCTIONS D'ÉQUIPEMENTS D'UTILISATEURS

(30) Priority: 13.03.2006 CN 200610057406
(43) Date of publication of application: 02.04.2008
(73) Proprietor: Huawei Technologies Co., Ltd., Longgang District Shenzhen 518129 (CN)
(72) Inventor: LI, Jia, Shenzhen Guangdong 518129 (CN); LV, Jiuyou c/o Huawei Adm. Building, Shenzhen 518129, Guangdong (CN)
(74) Representative: Körber, Martin Hans
(86) International application number: PCT/CN2007/000160
(87) International publication number: WO 2007/104213

(56) References cited:
- EP-A- 1 035 747
- EP-A- 1 054 570
- WO-A-97/28662
- CN-A- 1 549 614
- CN-A- 1 578 507
- CN-A- 1 691 808
- JP-A- 2005 136 535
- US-A1- 2004 228 460

## Description

### FIELD OF THE TECHNOLOGY

The present invention relates to the field of telecommunications, and in particular, it relates to the management of user equipment (UE) functionality.

### BACKGROUND OF THE INVENTION

With the development of telecommunication technologies, UE's, such as mobile phone terminals, have gained more and more powerful functionality, e.g., camera functionality and flash storage functionality. Mobile phone terminals of today are able to do tasks that required specialized equipment in the past. With the increased functionality of mobile terminals, it has become increasingly difficult to restrict specific mobile phone functions in specified geographic areas. For example, photography is forbidden in some sensitive areas. The traditional method to prevent photography is to prohibit carrying cameras into these areas. However, mobile phone terminals may take photographs. It is not feasible to prohibit mobile phone terminals in these areas. It is also not feasible to prohibit mobile phone terminals that have photographic functionality in these areas.
EP 1 054 570 A1 discloses a mobile terminal for a wireless cellular telecommunication system, which has a protection mode in which the mobile terminal is put after receiving a protection signal from a base station of a predetermined area to be protected from disturbing usage of the mobile terminal, and which informs the user that the mobile terminal has been switched into the protection mode.
EP 1 035 747 A1 discloses a base station of a wireless protection system for protecting a predetermined area for mobile terminals of a wireless telecommunication system, said wireless protection system being different from said wireless telecommunication system, with a generating means for generating protection signals for changing a mode of mobile terminals of said wireless telecommunication system receiving said protection signal for protecting a predetermined area from disturbing use of mobile terminals, transmitting means for transmitting said protection signals generated in said generating means on the basis of said wireless protection system within said predetermined area so that protection signals are received by mobile terminals with said predetermined area to change a mode thereof and thus to protect the predetermined area.
In both EP 1 054 570 A1 and EP 1 035 747 A1, when the protection area, which is located within the range of a base station of the wireless telecommunication system, is determined, the base station of the wireless protection system, i.e., a protection signal transmitter disclosed in the EP 1 054 570 A1 and EP 1 035 747 A1, is further needed to transmit the protection signals, which greatly increase the cost for manage the UE functionality.
US 2004/0228460 A1 discloses a portable communication device which includes a transceiver configured to receive wireless communications, and a controller coupled to the transceiver. The controller may be configured to process communications transmitted and received by the transceiver, and the controller may be configured to provide a plurality of functionalities of the portable communication device, in addition, the controller may be configured to selectively inhibit operation of at least one of the plurality of functionalities while maintaining operation of at least another of the plurality of functionalities responsive to an inhibit communication received wirelessly at the transceiver.
In US 2004/0228460 A1, a local control device, which may be a wireless access point, is also used to transmit inhibit communications used to inhibit functionalities of portable communications devices within range of the local control device, which also greatly increase the cost for manage the UE functionality.

Therefore, there is a need for a system or method to manage UE functionality to prevent unwanted functions in specified geographic areas, which also should reduce the cost for managing UE functionality.

### BRIEF SUMMARY OF THE INVENTION

Embodiments of the present invention provide a method and system for managing UE functionality to greatly reduce the cost of managing UE functionality in some sensitive areas by disabling or enabling UE functionality in a special area.

In one exemplary embodiment of the present invention, a method for managing UE functionality in a specified area is provided. The method includes that a network receives a requirement of disabling the UE functionality in a specified area. The network configures a UE functionality indication in a system message of one or more dedicated cells covering the specified area according to the requirement and broadcasts the system message of the one or more dedicated cells. A UE obtains the system message of the one or more dedicated cells and disables the UE functionality according to the UE functionality indication in the system message

In one exemplary embodiment of the present invention, a system for managing UE functionality in a specified area is described. The system includes a UE and a network device in the network side. The network device includes a configuring module and a sending module. The UE includes a functionality management module. The configuring module is capable of configuring a UE functionality indication in a system message of the cells covering the specified area, according to a requirement of disabling the UE functionality in the specified area, received by the network device. The sending module is capable of sending the system message configured by the configuring module. The functionality management module is capable of obtaining the UE functionality indication from the system message received by the UE and disabling the UE functionality according to the UE functionality indication.

In one exemplary embodiment of the present inventions, a network device is provided. The network device includes a configuring module and a sending module. The configuring module is capable of configuring a UE functionality indication in a system message of the cells covering the specified area, according to a requirement of disabling the UE functionality in the specified area, received by the network device. The sending module is capable of sending the system message configured by the configuring module, so that a UE disables the UE functionality according to the UE functionality indication in the system message.

In one exemplary embodiment of the present inventions, a UE is provided. The UE includes a functionality management module, which is capable of obtaining a UE functionality indication in a system message of the cells covering the specified area from network and capable of disabling the UE functionality indicated by the UE functionality indication.

In the embodiments of the present invention, the network takes UE functionalities as the object of network management. Thus, the UE can enable or disable user equipment functionality in a specified area. The embodiments can effectively resolve the problem of management for multi functionalities of UE in a sensitive area.

### BRIEF DESCRIPTION OF THE DRAWINGS

Figure 1 is a flowchart according to an embodiment of the present invention.

Figure 2 is a schematic drawing illustrating the state of the cells before an operator adjusts network planning for an area where a UE's function is to be disabled.

Figure 3 is a schematic drawing illustrating the state of cells after an operator adjusts network planning for an area where a UE's function is to be disabled.

Figure 4 is a block diagram illustrating an exemplary structure of UE according to one embodiment of the present invention.

Figure 5 is a work schematic diagram of the function management module of UE according to one embodiment of the present invention

### DETAILED DESCRIPTION OF THE INVENTION

Embodiments of the present invention provide a method and system for managing UE functionality in a geographic area. Through this method, the network takes the function, which is needed to be disabled, of user equipments such as mobile phone terminals as network management objective. To limit mobile phone terminals functionality in a specified area, a network sets an information element in the cell system message of the specified area. The information element indicates which functions of a UE are to be enabled or disabled. This method provides a value adding service for operators and can effectively solve the problem of management problem of multi function mobile phone terminals in sensitive areas.

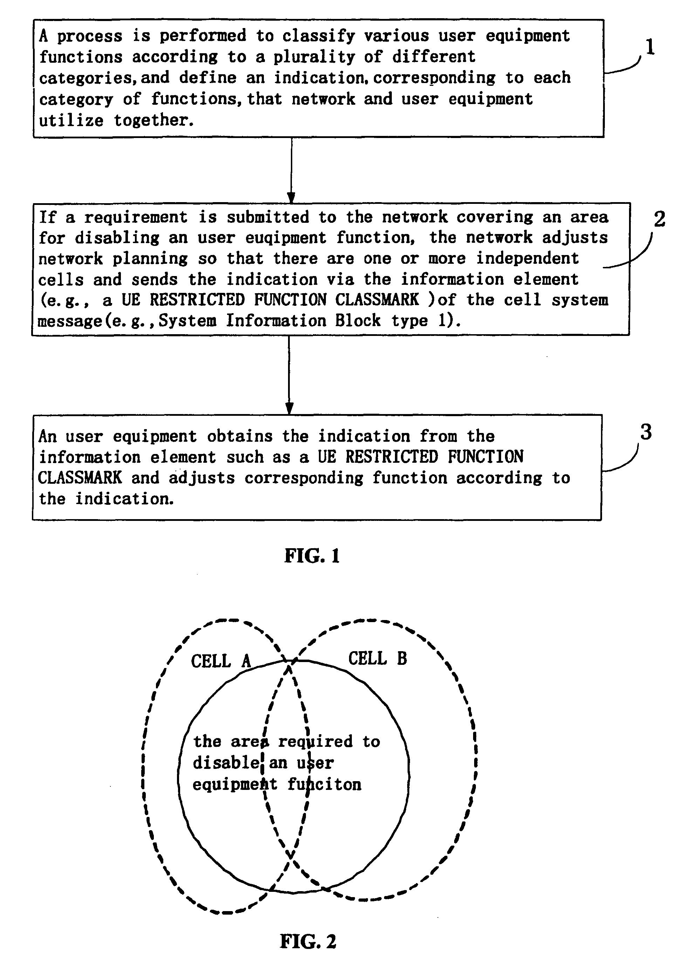

Figure 1 describes a method for managing UE functionality in accordance with an embodiment of the present invention. Referring to Figure 1, the method may be described as follows:

In block 1 of Figure 1, a process is performed to classify various UE functions into a plurality of different categories and define a UE function indication for each category of functions. This indication is utilized by both the network and the UE.

In block 1 of Figure 1, the classification of UE function may be provided based on the purpose of the function. The classification may be used to allow for future development of functionality. In an embodiment, the functions of UE are classified as follows:

Category One: Speaker Function

This category may include those functions currently existing or appearing in the future that may cause noise pollution, such as ringing tone function and speaker function. Furthermore, the speaker function may be applied to hands free set or MP3 player.

Category Two: Camera Function

This category may include those video functions currently existing or appearing in the future, such as a still camera function, video playback function and record function.

Category Three: Non-Network Connection Data Communication Function

This category may include those non-network connection data communication functions currently existing or appearing in the future, such as infrared connection function, blue tooth connection function and data line connection function.

Furthermore, in block 1 of Figure 1, a UE function indication is configured such that each code is set to correspond to each category. In an embodiment the indication is utilized by both the network and the UE. For example, the code may be a binary code (such as 1 or 0) to indicate whether a category of functions is disabled. In one embodiment, the "1" may represent disablement of a category of functions and the "0" may represent enablement of a category of functions.

Because the network and UE's know about the UE function indication, the UE may control the corresponding function according to the UE function indication of the message obtained from the network.

In block 2 of Figure 1, if a requirement for disabling a UE function is submitted to the network covering an area, the network adjusts network planning so that there are one or more dedicated cells that cover the specified area. The network configures the UE function indication according to the requirement. In an embodiment, the network sends by broadcast the UE function indication via an added information element, such as a "UE RESTRICTED FUNCTION CLASSMARK" of the cell system message (e.g., "System Information Block type1")

In block 2 of Figure 1, if the requirement is submitted to the network covering the area for disabling a UE function and there are no dedicated cells covering the area, the network can not distinguish between the specified area and other areas. In this situation, the network planning may need to be adjusted so that there are one or more dedicated cells covering the specified area.

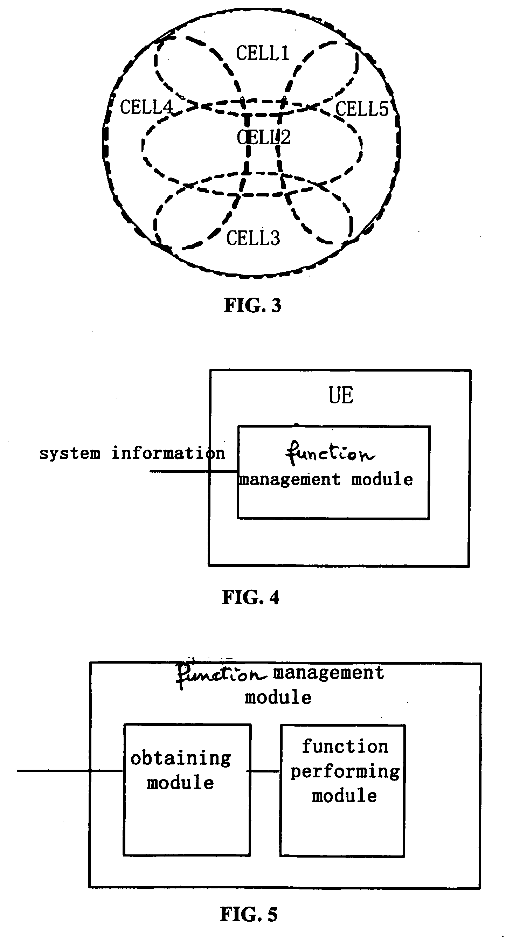

For example, referring to Figure 2, the area surrounded by the solid line is the specified area and a requirement is submitted to disable a category of functions in this specified area. Cell A and/or cell B, what are denoted by broken lines, cover the specified area, but also cover other areas. Limiting UE functionality of cell A and/or cell B would not be acceptable, as it would affect an area out side of the specified area. Therefore, the network adjusts network planning according to the requirement so that there are one or more dedicated cells. The dedicated cells are shown in Figure3. Referring to Figure 3, there are five cells, from cell 1 to 5, covering the area surrounded by the solid line.

If there are one or more dedicated cells, only covering the area, it is not necessary to adjust the network planning.

After the network planning is adjusted, the network sets a UE function indication according to the requirement of the specified area. In an embodiment the network sends the UE function indication via an information element, such as a UE RESTRICTED FUNCTION CLASSMARK, in the system message (E.G., System Information Block type1).

For example, in the format of the information element, such as a UE RESTRICTED FUNCTION CLASSMARK, the information element may be configured as a single byte, and each bit may represent a category of UE functions. To allow for future technologies, the information element may preserve extension bits for later use. In an embodiment the format of the information element is shown in table 1:

| Reserved extension bits | Non-network connection data communication function | Camera function | Speaker function |
|---|---|---|---|
| 5 bits | 1 bit | 1 bit | 1 bit |

Referring to table 1, in an embodiment, if the information element is defaulted to a certain value, such as 0, this default value allows the functions to be enabled. If the value of a bit of the information element is 1, the function corresponding to the bit is disabled. If the value of a bit of the information element is 0, the function corresponding to the bit is enabled.

For example, in a specified area where quiet is required, such as in a hospital or a theater, if it is necessary to disable the ringing tone function of UE, a requirement for disabling the ringing tone function is sent to the network covering the specified areas. If the network obtains the requirement, the network modifies a configuration parameter of the cell covering the specified area. The network sets the value of the bit corresponding to the speaker function in the information element such as a UE RESTRICTED FUNCTION CLASSMARK to the value for disabling (e.g., 1). The network sends the UE indication for disabling the ringing tone function via the information element of the system message such as System Information Block type1.

In block 3 of Figure 1, if a UE receives the system message such as System Information Block type1 , the UE obtains the UE function indication from the information element such as UE RESTRICTED FUNCTION CLASSMARK. The UE disables the corresponding function according to the UE function indication.

For example, when a UE enters a specified area where a UE function is prohibited, the UE obtains the information element such as UE RESTRICTED FUNCTION CLASSMARK of the system message such as System Information Block type1 by broadcast. The UE learns the disabling of the ringing tone function by the information element and disables the corresponding ringing tone function according to the user function indication. In this way, the possibility of noise pollution caused by ringing tone is avoided.

When a UE is away from the specified area where a UE function is disabled and enters a new area, the UE obtains the UE function indication according to the information element of the system message of the new area. According to the indication, the UE may enable the corresponding function again.

Another embodiment is provided in Figure 4 .The UE includes a function management module.

When the UE receives a system message, if the function management module obtains a UE function indication indicating to disable a function; the function management module disables the corresponding function. If the function management module obtains the UE function indication of the system message indicating to enable the functions, the function management module enables the corresponding functions.

Figure 5 shows a schematic diagram illustrating an exemplary structure of the function management module. Referring to Figure 5, in an embodiment the function management module includes an obtaining module and a function performing module. If the UE receives a system message, the obtaining module analyzes the system message. If the obtaining module obtains the UE function indication indicated to disable a function (e.g., from the information element such as a UE RESTRICTED FUNCTION CLASSMARK of a system message), the obtaining module sends the indication to the function performing module. The function performing module disables the corresponding UE function according to the function indication. After the corresponding UE function is disabled, if the obtaining module obtains a UE function indication indicated to enable the function from the information element such as UE RESTRICTED FUNCTION CLASSMARK of the system information message, the obtaining module sends the indication to the function performing module. The function performing module enables the corresponding UE function according to the function indication.

In one embodiment of the present invention a network device is located at the network side and has a configuring module and a sending module.

If the network equipment receives a UE function disabling requirement for a specified area, the configuring module of the network device sets a user equipment function indication in the system message of the cell covering the area. In an embodiment, the configuring module sets the UE function indication in the information element such as UE RESTRICTED FUNCTION CLASSMARK of the system message. The sending module sends the system message set by the configuring module. The detail configuration of the information element of the system message may be referred to the description in the above method embodiments

In an embodiment, the information element is set to a default value in the system message in areas where UE functionality is not limited. In an embodiment the default value (e.g., 0) represents enablement of a UE function.

In an embodiment, If the requirement to disable a UE function in the geographic area is submitted to the network and if there are no dedicated cells covering the area, the network equipment will include a network planning adjustment module. The network planning adjustment module adjusts network planning so that there are one or more cells covering only the specified area. The details about network planning adjustment may be the same as the description of the method embodiments of the present invention.

An embodiment of the present invention provides a system for managing UE functionality. The system includes a UE and a network device located on the network. The network device includes a configuring module and a sending module. Optionally, the network device has a network planning adjustment module. In an embodiment, the user equipment also has a function management module and the operation of the function management module is performed by an obtaining module and a function performance module.

In an embodiment, The details about the operation between each modules in the system for managing user equipment functionality is the same as the description of the user equipment embodiment and the network equipment embodiment.

As shown in the embodiments of the present invention, the embodiments resolve the problem of management for multi function user equipment in some sensitive area by the user equipment function indication in the system message indicating disabling user equipment function. The implement of the embodiments of the present invention are low cost, easily performed and can obtain an effective management result.

The previous description of the preferred embodiments are provided to enable a person skilled in the art to make or use the present invention. Various modifications to these embodiments will be readily apparent to those skilled in the art, and the generic principals defined herein may be applied to other embodiments without the use of the inventive faculty. Thus, the present invention is not intended to be limited to the embodiments show herein, but is to be accorded the widest scope consistent with the principals and novel features disclosed in the appended claims.

## Claims

1. A method for managing user equipment UE functionality in a specified area, the method being implemented in a network device and comprising the steps of:
by the network device, configuring a UE functionality indication in a system message of one or more dedicated cells covering the specified area, the UE functionality indication for disabling or enabling the UE functionality in the specified area; and
by the network device, broadcasting the system message of the one or more dedicated cells to a UE.

2. The method of claim 1, comprising
by the network device, classifying (1) various UE functionalities into a plurality of different categories and
by the network device, defining (1) the UE functionality indication for a category of UE functionalities, wherein
the UE functionality indication is utilized by both the network device and the UE.

3. The method of claim 1 or 2,wherein
the categories of UE functionalities comprise non-network connection data communication functionality, or camera functionality, or speaker functionality.

4. The method as in any one of the preceding claims, configuring a UE functionality indication in a system message of one or more dedicated cells covering the specified area comprising:
by the network device, receiving (2) a requirement for disabling or enabling the UE functionality in the specified area; and
by the network device, configuring the UE functionality indication in the system message of one or more dedicated cells covering the specified area according to the received requirement.

5. The method as in any one of the preceding claims, further comprising:
by the network device, adjusting (2) network planning for the specified area to cause one or more dedicated cells to cover the specified area, if the specified area is not covered by dedicated cells.

6. A method for managing user equipment UE functionality in a specified area, the method being implemented in a UE and comprising the steps of:
by the UE, obtaining (3) a UE functionality indication in a system message of one or more dedicated cells covering the specified area from a network device, the UE functionality indication for disabling or enabling the UE functionality in the specified area; and
by the UE, disabling or enabling (3) the UE functionality based on the UE functionality indication.

7. The method of claim 6, wherein
the UE functionality indication is contained in an information element of the system message of the network (2).

8. A network device for managing user equipment UE functionality in a specified area, comprising
a configuring module, adapted to configure a UE functionality indication in a system message of one or more dedicated cells covering the specified area, the UE functionality indication for disabling or enabling the UE functionality in the specified area; and
a sending module, adapted to broadcast the system message of the one or more dedicated cells carrying the UE functionality indication configured by the configuring module.

9. The network device of claim 8, further comprising:
a network planning adjustment module, adapted to adjust network planning for the specified area to cause one or more cells dedicated to cover the specified area, if the specified area is not covered by dedicated cells.

10. A user equipment UE for managing UE functionality in a specified area, comprising:
a functionality management module, adapted to obtain a UE functionality indication in a system message of one or more dedicated cells covering the specified area from a network device, and disable or enable the UE functionality according to the UE functionality indication in the specified area.

11. The UE of claim 10, wherein the functionality management module comprises an obtaining module, adapted to obtain the UE functionality indication in the system message of one or more dedicated cells covering the specified area from the network, the UE functionality indication for disabling or enabling the UE functionality in the specified area; and
a functionality performing module, adapted to disable or enable the UE functionality according to the UE functionality indication obtained by the obtaining module.

12. A system for managing user equipment UE functionality in a specified area, comprising:
a UE according to any of claim 10 and 11 ;and
a network device according to claim 8 or 9.

## Patentansprüche

1. Verfahren zur Verwaltung von Benutzergerät-, UE-, Funktionalität in einem bestimmten Gebiet, wobei das Verfahren in einem Netzwerk-Gerät implementiert ist und folgende Schritte aufweist:
Konfigurieren eines Hinweises auf eine UE-Funktionalität in einer System-Nachricht von einer oder mehreren dedizierten Zelle(n), die das bestimmte Gebiet abdecken, durch das Netzwerk-Gerät, wobei sich der Hinweis auf die UE-Funktionalität auf die Deaktivierung oder Aktivierung der UE-Funktionalität in dem bestimmten Gebiet bezieht, und
Senden der System-Nachricht der einen oder mehreren dedizierten Zelle(n) an ein UE durch das Netzwerk-Gerät.

2. Verfahren nach Anspruch 1, folgende weitere Schritte aufweisend:
Klassifizieren (1) verschiedener UE-Funktionalitäten in eine Vielzahl unterschiedlicher Kategorien durch das Netzwerk-Gerät; und
Definieren (1) des Hinweises auf die UE-Funktionalität für eine Kategorie der UE-Funktionalität, wobei der Hinweis auf die UE-Funktionalität sowohl vom Netzwerk-Gerät als auch dem UE verwendet wird.

3. Verfahren nach Anspruch 1 oder 2, wobei die Kategorien der UE-Funktionalitäten eine Kommunikations-Funktionalität bei Nicht-Netz-Verbindungsdaten, eine Kamera-Funktionalität oder eine Lautsprecher-Funktionalität aufweisen.

4. Verfahren nach einem der vorangegangenen Ansprüche,
wonach ein Hinweis auf die UE-Funktionalität in einer System-Nachricht von einer oder mehreren dedizierten Zelle(n), die ein bestimmtes Gebiet abdecken, konfiguriert wird, weiterhin folgende Schritte aufweisend:
Empfangen (2) einer Voraussetzung für die Deaktivierung oder Aktivierung der UE-Funktionalität in dem bestimmten Gebiet durch das Netzwerk-Gerät; und
Konfigurieren des Hinweises auf die UE-Funktionalität in einer System-Nachricht von einer oder mehreren dedizierten Zelle(n), die ein bestimmtes Gebiet abdecken, durch das Netzwerk-Gerät entsprechend der empfangenen Voraussetzung.

5. Verfahren nach einem der vorangegangenen Ansprüche, weiterhin folgenden Schritt aufweisend:
Anpassen (2) der Netzwerk-Planung für das bestimmte Gebiet durch das Netzwerk-Gerät, um eine oder mehrere dedizierte Zelle(n) zu veranlassen, das bestimmte Gebiet abzudecken, wenn das bestimmte Gebiet nicht von dedizierten Zelle(n) abgedeckt ist.

6. Verfahren zur Verwaltung von Benutzergerät-, UE-, Funktionalität in einem bestimmten Gebiet, wobei das Verfahren in einem UE implementiert ist und folgende Schritte aufweist:
Empfangen (3) eines Hinweises auf die UE-Funktionalität in einer System-Nachricht von einer oder mehreren dedizierten Zelle(n), die das bestimmte Gebiet abdecken, durch das UE, wobei sich der Hinweis auf die UE-Funktionalität auf die Deaktivierung oder Aktivierung der UE-Funktionalität in dem bestimmten Gebiet bezieht; und
Deaktivieren und Aktivieren (3) der UE-Funktionalität durch das UE auf der Grundlage des Hinweises auf die UE-Funktionalität.

7. Das Verfahren nach Anspruch 6, wobei der Hinweis auf die UE-Funktionalität in einem Informations-Element der System-Nachricht des Netzwerks enthalten ist.

8. Ein Netzwerk-Gerät zur Verwaltung von Benutzergerät-, UE-, Funktionalität in einem bestimmten Gebiet, aufweisend:
eine Konfigurations-Einheit zur Konfiguration eines Hinweises auf die UE-Funktionalität in einer System-Nachricht von einer oder mehreren dedizierten Zelle(n), die das bestimmte Gebiet abdecken, wobei sich der Hinweis auf die UE-Funktionalität auf das Deaktivieren oder Aktivieren der UE-Funktionalität in dem bestimmten Gebiet bezieht, und
eine Sende-Einheit zum Senden der System-Nachricht der einen oder mehreren dedizierten Zelle(n), wobei die System-Nachricht den Hinweis auf die UE-Funktionalität übermittelt, der von der Konfigurationseinheit konfiguriert wird.

9. Netzwerk-Gerät nach Anspruch 8, weiter aufweisend:
eine Netzwerkplanungs-Anpassungseinheit zur Anpassung der Netzwerkplanung für das bestimmte Gebiet, um eine oder mehrere dedizierte Zelle(n) zu veranlassen, das bestimmte Gebiet abzudecken, wenn das bestimmte Gebiet nicht von dedizierten Zelle(n) abgedeckt ist.

10. Benutzergerät-, UE, zur Verwaltung von UE-Funktionalität in einem bestimmten Gebiet, aufweisend:
eine Funktionalitäts-Verwaltungseinheit zum Empfangen eines Hinweises auf die UE-Funktionalität in einer System-Nachricht von einer oder mehreren dedizierten Zelle(n), die das bestimmte Gebiet eines Netzwerks abdecken, und zur Deaktivierung und Aktivierung der UE-Funktionalität auf der Grundlage des Hinweises auf die UE-Funktionalität.

11. UE nach Anspruch 10, wobei die Funktionalitäts-Verwaltungseinheit weiterhin ein Empfangsmodul aufweist, das dazu geeignet ist, den Hinweis auf die UE-Funktionalität in einer System-Nachricht von einer oder mehreren dedizierten Zelle(n), die das bestimmte Gebiet abdecken, zu empfangen, wobei sich der Hinweis auf die UE-Funktionalität auf die Deaktivierung oder Aktivierung der UE-Funktionalität in dem bestimmten Gebiet bezieht; und
eine Funktionalitäts-Ausführungseinheit zur Deaktivierung oder Aktivierung der UE-Funktionalität auf der Grundlage des Hinweises auf die UE-Funktionalität, der vom Empfangsmodul empfangen wird.

12. System zur Verwaltung von Benutzergerät-, UE-, Funktionalität in einem bestimmten Gebiet, aufweisend:
ein UE nach einem der Ansprüche 10 oder 11; und
ein Netzwerk-Gerät nach Anspruch 8 oder 9.

## Revendications

1. Procédé de gestion d'une fonctionnalité d'équipements d'utilisateurs UE dans une zone spécifiée, le procédé étant mis en oeuvre dans un dispositif de réseau et comprenant les étapes de:
par le dispositif réseau, configurer une indication de fonctionnalité UE dans un message de système d'une ou plusieurs cellules dédiées couvrant la zone spécifiée, l'indication de la fonctionnalité UE pour invalider ou valider la fonctionnalité UE dans la zone spécifiée; et
par le dispositif de réseau, diffuser le message système d'une ou plusieurs cellules dédiées à un UE.

2. Procédé selon la revendication 1 comprenant
par le dispositif de réseau, classifier (1) diverses fonctionnalités UE en une pluralité de catégories différentes et
par le dispositif de réseau, définir (1) l'indication de la fonctionnalité UE pour une catégorie de fonctionnalités UE, où
l'indication de la fonctionnalité UE est utilisée à la fois par le dispositif de réseau et le UE.

3. Procédé selon la revendication 1 ou 2, dans lequel
les catégories des fonctionnalités UE comprennent une fonctionnalité de communication de données de connexion non-réseau, ou fonctionnalité correspondante.

4. Procédé selon l'une quelconque des revendications précédentes, configurant une indication de fonctionnalité UE dans un message de système d'une ou de plusieurs cellules dédiées couvrant la zone spécifiée comprenant:
par le dispositif de réseau, recevoir (2) une demande d'invalidation ou de validation de la fonctionnalité UE dans la zone spécifiée; et
par le dispositif de réseau, configurer l'indication de la fonctionnalité UE dans le message de système d'une ou de plusieurs cellules dédiées couvrant la zone spécifiée selon la demande reçue.

5. Procédé selon l'une quelconque des revendications précédentes, comprenant en outre:
par le dispositif de réseau, ajuster (2) une planification de réseau pour la zone spécifiée pour amener une ou plusieurs cellules dédiées à couvrir la zone spécifiée, si la zone spécifiée n'est pas couverte par les cellules dédiées.

6. Procédé de gestion d'une fonctionnalité d'équipements d'utilisateurs UE dans une zone spécifiée, le procédé étant mis en oeuvre dans un UE et comprenant les étapes de:
par le UE, obtenir (3) une indication de fonctionnalité UE dans un message de système d'une ou de plusieurs cellules dédiées couvrant la zone spécifiée d'un dispositif de réseau, l'indication de la fonctionnalité UE pour invalider ou valider la fonctionnalité UE dans la zone spécifiée; et
par le UE, invalider ou valider (3) la fonctionnalité UE sur la base de l'indication de la fonctionnalité UE.

7. Procédé selon la revendication 6, dans lequel
l'indication de la fonctionnalité UE se trouve dans un élément d'informations du message de système du réseau (2).

8. Dispositif de réseau pour la gestion d'une fonctionnalité d'équipements d'utilisateurs UE dans une zone spécifiée, comprenant:
un module de configuration, apte à configurer une indication de fonctionnalité UE dans un message de système d'une ou de plusieurs cellules dédiées couvrant la zone spécifiée, l'indication de la fonctionnalité UE pour invalider ou valider la fonctionnalité UE dans la zone spécifiée; et
un module d'émission apte à diffuser le message de système d'une ou de plusieurs cellules dédiées précitées portant l'indication de la fonctionnalité UE configurée pour le module de configuration.

9. Dispositif de réseau selon la revendication 8, comprenant en outre:
un module d'ajustement de planification de réseau apte à ajuster une planification de réseau pour la zone spécifiée pour amener une ou plusieurs cellules dédiées à couvrir la zone spécifiée si la zone spécifiée n'est pas couverte par les cellules dédiées.

10. Equipement utilisateur UE pour la gestion d'une fonctionnalité UE dans une zone spécifiée, comprenant:
un module de gestion de fonctionnalité, apte à obtenir une indication de la fonctionnalité UE dans un message de système d'une ou de plusieurs cellules dédiées couvrant la zone spécifiée d'un dispositif de réseau, et invalider ou valider la fonctionnalité UE selon l'indication de la fonctionnalité UE dans la zone spécifiée.

11. UE selon la revendication 10, où le module de gestion de fonctionnalité comprend un module d'obtention, apte à obtenir l'indication de la fonctionnalité UE dans un message de système d'une ou de plusieurs cellules dédiées couvrant la zone spécifiée du réseau, l'indication de la fonctionnalité UE pour invalider ou valider la fonctionnalité UE dans la zone spécifiée; et
un module d'exécution de fonctionnalité apte à invalider ou valider la fonctionnalité UE selon l'indication de la fonctionnalité UE obtenue par le module d'obtention.

12. Système de gestion d'une fonctionnalité d'équipements d'utilisateurs UE dans une zone spécifiée, comprenant:
un UE selon l'une quelconque des revendications 10 et 11; et
un dispositif de réseau selon la revendication 8 ou 9.
